# FASCICULE DE BREVET EUROPEEN

(11) **EP 3 810 439 B1**
(45) Date de publication et mention de la délivrance du brevet: **01.06.2022**
(21) Numéro de dépôt: 19791305.6
(22) Date de dépôt: 18.06.2019
(51) Int. Cl.: B60C 1/00, C08L 15/00, C08C 19/22, C08C 19/25, C08K 9/04

(54) **COMPOSITION DE CAOUTCHOUC COMPRENANT UN ELASTOMERE FONCTIONNEL**
KAUTSCHUKZUSAMMENSETZUNG MIT EINEM FUNKTIONALEN ELASTOMER
RUBBER COMPOSITION COMPRISING A FUNCTIONAL ELASTOMER

(30) Priorité: 21.06.2018 FR 1855515
(43) Date de publication de la demande: 28.04.2021
(73) Titulaire: COMPAGNIE GENERALE DES ETABLISSEMENTS MICHELIN, 63000 Clermont-Ferrand (FR)
(72) Inventeur: DRONET, Séverin, 63040 Clermont-Ferrand Cedex 9 (FR); SCHNELL, Benoît, 63040 Clermont-Ferrand Cedex 9 (FR)
(74) Mandataire: Le Cam, Véronique Marie Christine
(86) Numéro de dépôt international: PCT/FR2019/051486
(87) Numéro de publication internationale: WO 2019/243730

(56) Documents cités:
- EP-A1- 2 990 218
- WO-A1-2009/133068
- WO-A1-2015/063161

## Description

La présente invention est relative à une composition de caoutchouc utilisable notamment pour la fabrication de matériau de pneumatiques, permettant la bonne dispersion de quantités élevées de charge inorganique renforçante, comprenant un coupage d'un élastomère diénique de faible masse moléculaire fonctionnalisé comprenant au sein de sa structure au moins un groupe alcoxysilyle, éventuellement partiellement ou totalement hydrolysé en silanol, lié à l'élastomère par l'atome de silicium, le groupe alcoxysilyle étant porteur d'une fonction amine liée à l'atome de silicium directement ou par l'intermédiaire d'un groupe espaceur, et d'un élastomère diénique de masse moléculaire plus élevée.

Pour obtenir les propriétés de renforcement et d'hystérèse optimales conférées par une charge dans une bande de roulement de pneumatique et ainsi une haute résistance à l'usure et une basse résistance au roulement, on sait qu'il convient d'une manière générale que cette charge soit présente dans la matrice élastomérique sous une forme finale qui soit à la fois la plus finement divisée possible et répartie de la façon la plus homogène possible. Or, de telles conditions ne peuvent être réalisées que dans la mesure où cette charge présente une très bonne aptitude, d'une part, à s'incorporer dans la matrice lors du mélange avec l'élastomère et à se désagglomérer, et, d'autre part, à se disperser de façon homogène dans cette matrice.

Depuis que les économies de carburant et la nécessité de protéger l'environnement sont devenues une priorité, il s'est avéré nécessaire de produire des pneumatiques ayant une résistance au roulement réduite sans pénalisation de leur résistance à l'usure.

Ceci a été rendu notamment possible grâce à l'emploi, dans les bandes de roulement de ces pneumatiques, de nouvelles compositions de caoutchouc renforcées au moins partiellement de charges inorganiques, en particulier de silices spécifiques du type hautement dispersibles, capables de rivaliser du point de vue renforçant avec un noir de carbone conventionnel de grade pneumatique, tout en offrant à ces compositions une hystérèse plus faible, synonyme d'une plus basse résistance au roulement pour les pneumatiques les comportant, ainsi qu'une adhérence améliorée sur sol mouillé, enneigé ou verglacé. Cependant, pour des raisons d'affinités réciproques, ces particules de charge inorganique ont une fâcheuse tendance, dans la matrice élastomérique, à s'agglomérer entre elles par des interactions fortes. Ces interactions ont pour conséquence néfaste de limiter la dispersion de la charge et donc les propriétés de renforcement à un niveau sensiblement inférieur à celui qu'il serait théoriquement possible d'atteindre si toutes les liaisons (charge inorganique/élastomère) susceptibles d'être créées pendant l'opération de mélangeage, étaient effectivement obtenues.

Pour atteindre un tel objectif de nombreuses solutions ont été proposées consistant notamment à modifier la nature des polymères et copolymères diéniques en fin de polymérisation au moyen d'agents de couplage ou d'étoilage ou de fonctionnalisation.

Dans le cadre des mélanges contenant une charge inorganique renforçante, il a été proposé d'utiliser des copolymères diéniques fonctionnalisés par des groupements silanol ou encore alcoxysilyle, porteur ou non d'une autre fonction.

La fonctionnalisation par des composés alcoxysilane porteurs d'une fonction aminée a été largement décrite dans la littérature brevet. Les élastomères fonctionnalisés en bout de chaîne par des fonctions alcoxysilyles portant un groupement aminé ont été associés aussi bien à de la silice qu'à du noir de carbone, voire un mélange de ces deux charges, dans des compositions de caoutchouc destinées à la fabrication de pneumatiques.

La Demanderesse a décrit dans le document WO 2009133068 A1, un élastomère diénique fonctionnalisé comprenant essentiellement l'espèce couplée d'un élastomère possédant au sein de la chaîne un groupement porteur d'une fonction alcoxysilyle et d'une fonction amine, l'atome de silicium de ce groupement liant les deux parties de la chaîne élastomère diénique. Cet élastomère majoritairement fonctionnalisé en milieu de chaîne confère à la composition le contenant des propriétés mécaniques et dynamiques améliorées, notamment une hystérèse améliorée, tout en conservant une mise en œuvre à cru satisfaisante, en vue notamment d'une utilisation en bande de roulement pour pneumatique.

Pour atteindre certaines performances du pneu, il peut s'avérer nécessaire d'utiliser plus ou moins de charge renforcante dans les compositions de caoutchouc qui composent les différentes parties du pneu. Or, l'utilisation d'un taux élevé de charge pour atteindre certaines de ces performances est toutefois antinomique avec la baisse recherchée de la résistance au roulement.

Il est une préoccupation constante des concepteurs de matériaux destinés à la fabrication de pneus d'améliorer les compromis de propriétés des mélanges, notamment de diminuer leur hystérèse en vue de réduire d'avantage la résistance au roulement des pneus et de contrôler leur rigidité pour ne pas dégrader l'adhérence des pneus, et cela quelle que soit la quantité de silice, même élevée.

La Demanderesse a découvert que l'amélioration de ce compromis pouvait être atteint au moyen d'une composition de caoutchouc particulière, même en présence d'un taux élevé de charge inorganique renforçante.

L'invention a donc pour objet une composition de caoutchouc à base d'au moins une charge inorganique renforçante et une matrice élastomère comprenant au moins un élastomère diénique de haut poids moléculaire et un élastomère diénique fonctionnalisé de faible poids moléculaire comprenant au sein de sa structure au moins un groupe alcoxysilyle, éventuellement partiellement ou totalement hydrolysé en silanol, lié à l'élastomère par l'atome de silicium, le groupe alcoxysilyle étant porteur d'une fonction amine liée à l'atome de silicium directement ou par l'intermédiaire d'un groupe espaceur.

L'invention se rapporte à une composition de caoutchouc à base d'au moins
- Une matrice élastomère comprenant
   i. Un premier élastomère diénique ayant une masse moléculaire en nombre, Mn, supérieure ou égale à 100 000 g/mol
   ii. Un deuxième élastomère diénique fonctionnalisé comprenant au sein de sa structure un groupe alcoxysilyle, éventuellement partiellement ou totalement hydrolysé en silanol, lié à l'élastomère par l'atome de silicium, le groupe alcoxysilyle étant porteur d'une fonction amine liée à l'atome de silicium directement ou par l'intermédiaire d'un groupe espaceur, ledit élastomère diénique fonctionnalisé a une masse moléculaire en nombre, Mn, inférieure ou égale à 80 000 g/mol
- Une charge inorganique renforçante.

Avantageusement, le deuxième élastomère diénique fonctionnalisé comprend majoritairement des chaînes linéaires. Particulièrement alors, ces chaînes linéaires du deuxième élastomère diénique sont majoritairement des chaînes couplées par le groupe alcoxysilyle.

La fonction amine portée par le groupe alcoxysilyle est avantageusement une fonction amine tertiaire, particulièrement la fonction diéthylamino ou diméthylamino.

Lorsqu'un groupe espaceur lie la fonction amine à l'atome de silicium, celui-ci est avantageusement un groupe hydrocarboné divalent aromatique en C₆-C₁₈ ou un groupe hydrocarboné divalent aliphatique en C₁-C₁₈, interrompu ou non par un ou plusieurs hétéroatomes.

En outre, la quantité en charge inorganique renforçante varie avantageusement de 20% à 40% en volume, par rapport au volume de la composition de caoutchouc.

La proportion dudit deuxième élastomère diénique fonctionnalisé varie avantageusement de 50% à 95% en poids par rapport au poids total dudit premier élastomère diénique et dudit deuxième élastomère diénique fonctionnalisé. En particulier, la fraction pondérale dudit deuxième élastomère diénique fonctionnalisé dans la matrice élastomérique est supérieure ou égale à 50% en poids, et varie en particulier de 50% à 95% en poids. En particulier, la fraction pondérale dudit premier élastomère diénique dans la matrice élastomérique est inférieure ou égale à 50% en poids, plus particulièrement elle varie de 5% à 50% en poids.

Avantageusement, ledit premier élastomère diénique a une masse moléculaire en nombre, Mn, allant de 100 000 g/mol à 600 000 g/mol. Ledit premier élastomère diénique est avantageusement choisi dans le groupe constitué par les polybutadiènes, le caoutchouc naturel, les polyisoprènes de synthèse, les copolymères de butadiènes, les copolymères d'isoprène et les mélanges de ces élastomères, en particulier un copolymère de butadiène-styrène.

Avantageusement, ledit deuxième élastomère diénique fonctionnalisé a une masse moléculaire en nombre, Mn, allant de 20 000 g/mol à 80 000 g/mol. Ledit deuxième élastomère diénique fonctionnalisé est avantageusement choisi dans le groupe constitué par les polybutadiènes, le caoutchouc naturel, les polyisoprènes de synthèse, les copolymères de butadiènes, les copolymères d'isoprène et les mélanges de ces élastomères, en particulier un copolymère de butadiène-styrène.

Ledit deuxième élastomère diénique fonctionnalisé comprend au sein de sa structure au moins un groupe alcoxysilyle, éventuellement partiellement ou totalement hydrolysé en silanol, lié à l'élastomère par l'atome de silicium, le groupe alcoxysilyle étant porteur d'une fonction amine liée à l'atome de silicium directement ou par l'intermédiaire d'un groupe espaceur,.

Le groupe alcoxysilyle porteur d'une fonction amine répond avantageusement à la formule :

(*-)_{3-y}Si (OR)_{y}(X-NR'₂)

dans laquelle,
- *- représente la liaison à une chaîne élastomère ;
- le radical alcoxyle de formule -OR, éventuellement partiellement ou totalement hydrolysés en hydroxyle, R représente un radical alkyle, linéaire ou ramifié, étant en C₁-C₁₀, voire en C₁-C₈, de préférence un radical alkyle en C₁-C₄, plus préférentiellement méthyle et éthyle ;
- X représente un groupement espaceur, de préférence un radical hydrocarboné divalent aromatique en C₆-C₁₈ ou un radical hydrocarboné divalent aliphatique en C₁-C₁₈, de préférence un radical hydrocarboné divalent aliphatique linéaire en C₁-C₁₀, plus préférentiellement un groupement -(CH₂)ₙ-, n variant de 3 à 8 ;
- les radicaux R' représentent, chacun indépendamment l'un de l'autre, un atome d'hydrogène, un radical alkyle, linéaire ou ramifié, en C₁-C₁₀, voire en C₁-C₈, de préférence un radical alkyle en C₁-C₄, plus préférentiellement méthyle et éthyle, ou un groupement trialkylsilyle avec des radicaux alkyles en C₁-C₄, plus préférentiellement méthyle et éthyle,
- y est un entier valant 1 ou 2, de préférence 1.

Dans la composition de caoutchouc, la teneur en charge inorganique renforçante va avantageusement de 50 pce à 170 pce. En outre, la quantité en charge inorganique renforçante varie plus avantageusement de 20% à 35% en volume, par rapport au volume de la composition de caoutchouc.

La charge inorganique renforçante est avantageusement de la silice ou un noir de carbone recouvert de silice, de préférence de la silice.

La charge inorganique renforçante constitue avantageusement la majorité ou encore la totalité de la charge renforçante.

La silice est avantageusement une silice de surface spécifique BET comprise entre 30 à 400 m²/g, avantageusement entre 40 et 300m²/g, avantageusement entre 60 et 250m²/g.

Les compositions selon l'invention permettent :
- De disperser plus finement la silice que dans des compositions comprenant uniquement des élastomères diéniques fonctionnels de grandes masses molaires, et de sortir du compromis usuel de renforcement d'un mélange par la silice.
- D'incorporer des quantités importantes de silice dans la composition.
- De réduire la rigidité du matériau à iso taux de charge par rapport à des compositions comprenant uniquement des élastomères diéniques fonctionnels de grandes masses molaires.

L'invention se rapporte aussi à un article fini ou semi-fini comportant une composition de caoutchouc selon l'invention.

L'invention se rapporte également à une bande de roulement de pneumatique comportant une composition de caoutchouc selon l'invention.

L'invention se rapporte aussi à un pneumatique ou produit semi-fini comportant une composition de caoutchouc selon l'invention.

### Description détaillée de l'invention

Dans la présente description, sauf indication expresse différente, tous les pourcentages (%) indiqués sont des % en masse.

D'autre part, tout intervalle de valeurs désigné par l'expression "entre a et b " représente le domaine de valeurs allant de plus de a à moins de b (c'est-à-dire bornes a et b exclues) tandis que tout intervalle de valeurs désigné par l'expression " de a à b" signifie le domaine de valeurs allant de a jusqu'à b (c'est-à-dire incluant les bornes strictes a et b). Dans la présente, l'intervalle de valeurs "de a à b" comprend l'intervalle de valeurs "entre a et b".

Par l'expression composition "à base de", il faut entendre une composition comportant le mélange et/ou le produit de réaction des différents constituants utilisés, certains de ces constituants de base étant susceptibles de, ou destinés à, réagir entre eux, au moins en partie, lors des différentes phases de fabrication de la composition, en particulier au cours de sa réticulation ou vulcanisation.

Dans la présente demande, par "majoritairement" ou "majoritaire" en liaison avec un composé, on entend que ce composé est majoritaire parmi les composés du même type dans la composition, c'est-à-dire que c'est celui qui représente la plus grande fraction pondérale parmi les composés du même type.

Les composés mentionnés dans la description et entrant dans la préparation de polymères ou de compositions de caoutchouc peuvent être d'origine fossile ou biosourcés. Dans ce dernier cas, ils peuvent être, partiellement ou totalement, issus de la biomasse ou obtenus à partir de matières premières renouvelables issues de la biomasse. Sont concernés notamment les polymères, les plastifiants, les charges....

### Elastomère diénique :

Par élastomère diénique, doit être compris de manière connue un élastomère issu au moins en partie (i.e., un homopolymère ou un copolymère) de monomères diènes (monomères porteurs de deux doubles liaisons carbone-carbone, conjuguées ou non). Plus particulièrement, par élastomère diénique, on entend tout homopolymère obtenu par polymérisation d'un monomère diène conjugué ayant 4 à 12 atomes de carbone, ou tout copolymère obtenu par copolymérisation d'un ou plusieurs diènes conjugués entre eux ou avec un ou plusieurs composés vinylaromatiques ayant de 8 à 20 atomes de carbone. Dans le cas de copolymères, ceux- ci contiennent de 20 % à 99 % en poids d'unités diéniques, et de 1 à 80 % en poids d'unités vinylaromatique.

A titre de diènes conjugués utilisables dans le procédé conforme à l'invention conviennent notamment les 1,3-diènes, tels que notamment le 1,3-butadiène, l'isoprène et le 1,3-pentadiène, et le 2,4 hexadiène, etc, en particulier conviennent le 1,3-butadiène et l'isoprène.

A titre de composés vinylaromatiques conviennent notamment le styrène, l'ortho-, méta, para-méthylstyrène, le mélange commercial "vinyltoluène", le para-tertiobutylstyrène, les méthoxystyrènes, le vinylmésitylène, le divinylbenzène et le vinylnaphtalène, etc.

L'élastomère diénique est choisi préférentiellement dans le groupe des élastomères diéniques fortement insaturés constitué par les polybutadiènes (BR), le caoutchouc naturel, les polyisoprènes (IR) de synthèse, les copolymères de butadiène, en particulier les copolymères de butadiène et d'un monomère vinyl aromatique, les copolymères d'isoprène et les mélanges de ces élastomères. De tels copolymères sont plus particulièrement des copolymères de butadiène-styrène (SBR), des copolymères d'isoprène-butadiène (BIR), des copolymères d'isoprène- styrène (SIR) et des copolymères d'isoprène-butadiène-styrène (SBIR). Parmi ces copolymères, les copolymères de butadiène-styrène (SBR) sont particulièrement préférés.

L'élastomère peut être à blocs, statistique, séquencé, microséquencé, etc....

Dans la composition selon l'invention, on utilise au moins deux élastomères diéniques.

Le premier élastomère a une masse moléculaire en nombre, Mn, supérieure ou égale à 100 000 g/mol, avantageusement allant de 100 000 g/mol à 600 000 g/mol, plus avantageusement allant de 140 000 g/mol à 500 000 g/mol. Avantageusement encore, le premier élastomère a une masse moléculaire en nombre, Mn, supérieure ou égale à 200 000 g/mol, plus avantageusement allant de 200 000 g/mol à 600 000 g/mol.

Ledit premier élastomère diénique est avantageusement choisi dans le groupe constitué par les polybutadiènes, le caoutchouc naturel, les polyisoprènes de synthèse, les copolymères de butadiènes, les copolymères d'isoprène et les mélanges de ces élastomères, en particulier un copolymère de butadiène-styrène.

Il est entendu que le premier élastomère peut être constitué par un mélange d'élastomères qui se différencient les uns des autres de par leur microstructure ou leur macrostructure.

Selon des variantes de l'invention, ledit premier élastomère diénique peut être modifié, c'est à dire qu'il peut être soit couplé et/ou étoilé, soit fonctionnalisé, soit couplé et/ou étoilé et simultanément fonctionnalisé.

Ainsi, selon ces variantes, ledit premier élastomère diénique peut être couplé et/ou étoilé, par exemple au moyen d'un atome silicium ou d'étain qui lie entre elles les chaînes élastomères.

Selon ces mêmes variantes, ledit premier élastomère diénique peut être simultanément ou alternativement fonctionnalisé et comprendre au moins un groupe fonctionnel. Par groupe fonctionnel, on entend un groupe comprenant au moins un hétéroatome choisi parmi Si, N, S, O, P. Conviennent particulièrement à titre de groupes fonctionnels ceux comprenant au moins une fonction telle que : silanol, alcoxysilyle, amine primaire ou secondaire, protégée ou non, ou amine tertiaire, cyclique ou non, isocyanate, imine, cyano, thiol, protégée ou non, carboxylate, époxyde, phosphine primaire ou secondaires, protégées ou non, ou phosphine tertiaire.

Avantageusement, selon d'autres variantes de l'invention, ledit premier élastomère diénique n'est pas modifié.

Le deuxième élastomère a une masse moléculaire en nombre, Mn, inférieure ou égale à 80 000 g/mol, avantageusement allant de 20 000 g/mol à 80 000 g/mol.

Ledit deuxième élastomère diénique est avantageusement choisi dans le groupe constitué par les polybutadiènes, le caoutchouc naturel, les polyisoprènes de synthèse, les copolymères de butadiènes, les copolymères d'isoprène et les mélanges de ces élastomères, en particulier un copolymère de butadiène-styrène.

Ce deuxième élastomère diénique comprend au sein de sa structure un groupe alcoxysilyle, éventuellement partiellement ou totalement hydrolysé en silanol, lié à l'élastomère par l'atome de silicium, le groupe alcoxysilyle étant porteur d'une fonction amine liée à l'atome de silicium directement ou par l'intermédiaire d'un groupe espaceur .

Dans la présente description, il faut comprendre « au sein de sa structure » comme dans la chaîne élastomère incluant les extrémités de la chaîne.

Le deuxième élastomère diénique peut être un polymère linéaire ou étoilé, ou encore un mélange d'un polymère linéaire et d'un polymère étoilé.

Dans la présente description, on entend par élastomère diénique fonctionnalisé, un mélange de chaînes élastomères issues de la réaction de fonctionnalisation avec un agent de fonctionnalisation.

L'homme du métier comprendra qu'une réaction de fonctionnalisation avec un agent comprenant plus d'une fonction réactive vis-à-vis de l'élastomère (pseudo)vivant issu de la réaction de polymérisation, résulte en un mélange de chaînes fonctionnalisées en bout de chaîne et dans la chaîne (également appelées couplées), constituant les chaînes linéaires fonctionnelles de l'élastomère, et éventuellement de chaînes étoilées. Selon les conditions opératoires, principalement le rapport molaire de l'agent de fonctionnalisation aux chaînes vivantes et le nombre de fonctions réactives, certaines chaînes sont plus ou moins présentes, voire majoritaires, dans le mélange.

Dans la présente demande, par "majoritairement" ou "majoritaire" en liaison avec un composé, on entend que ce composé est majoritaire parmi les composés du même type dans la composition, c'est-à-dire que c'est celui qui représente la plus grande fraction pondérale parmi les composés du même type. Ainsi, une population de type de chaînes fonctionnelles d'un élastomère diénique fonctionnalisé dite majoritaire est celle représentant la plus grande fraction pondérale parmi l'ensemble des populations de types de chaînes constituant l'élastomère diénique fonctionnalisé, par rapport au poids total de l'élastomère diénique fonctionnalisé. Cette plus grande fraction pondérale peut être particulièrement au moins 50% en poids. Dans un système comprenant un seul composé d'un certain type, celui-ci est majoritaire au sens de la présente invention.

Selon un mode de réalisation préférentiel de l'invention, le deuxième élastomère diénique est majoritairement sous une forme linéaire, c'est-à-dire que s'il comporte des chaînes étoilées, celles-ci représentent une fraction pondérale minoritaire dans cet élastomère.

Selon un mode de réalisation préférentiel de l'invention, les chaînes linéaires du deuxième élastomère diénique sont majoritairement couplées.

Selon un mode de réalisation préférentiel de l'invention, le deuxième élastomère diénique est majoritairement sous une forme linéaire, les chaînes linéaires du deuxième élastomère diénique étant majoritairement couplées.

Alors, selon un mode de réalisation particulièrement avantageux de l'invention, les chaînes linéaires couplées du deuxième élastomère diénique représentent au moins 50% en poids, de préférence au moins 70% en poids par rapport au poids total dudit deuxième élastomère diénique fonctionnalisé.

Par groupe alcoxysilyle, il faut comprendre selon l'invention un radical silyle comprenant au moins une fonction alcoxy (-OR) , éventuellement partiellement ou totalement hydrolysé en hydroxyle, liée à l'atome de silicium, avec R représentant un radical alkyle, linéaire ou ramifié, en C₁-C₁₀, voire en C₁-C₈, de préférence un radical alkyle en C₁-C₄, plus préférentiellement méthyle et éthyle .

La fonction amine liée à l'atome de silicium peut être une fonction amine primaire, protégée ou non, une fonction amine secondaire protégée ou non, ou une amine tertiaire. Le cas échéant, la protection de la fonction amine se fait de préférence par au moins un groupement trialkylsilyle avec des radicaux alkyles en C₁-C₄, plus préférentiellement méthyle et éthyle. Préférentiellement, la fonction amine est une fonction amine tertiaire dont les substituants sont des radicaux alkyles de préférence en en C₁-C₁₀, voire en C₁-C₈, de préférence un radical alkyle en C₁-C₄, plus préférentiellement méthyle et éthyle.

Le groupe espaceur qui lie la fonction amine à l'atome de silicium est un groupe hydrocarboné divalent aromatique en C₆-C₁₈ ou un groupe hydrocarboné divalent aliphatique en C₁-C₁₈, interrompu ou non par un ou plusieurs hétéroatomes. De préférence le groupe espaceur un radical hydrocarboné divalent aliphatique linéaire en C₁-C₁₀, plus préférentiellement un groupement -(CH₂)ₙ-, n valant de 3, 4, 5, 6, 7 ou 8.

Des élastomères diéniques ainsi fonctionnalisés sont par exemple décrits dans les documents WO 2009133068 A1 et WO 2015018743 A1.

Selon un mode de réalisation particulier de l'invention, le groupe alcoxysilyle porteur d'une fonction amine peut être représenté à la formule :

(*-)_{3-y}Si (OR)_{y}(X-NR'₂)

dans laquelle,
- *- représente la liaison à une chaîne élastomère ;
- le radical alcoxyle de formule -OR, éventuellement partiellement ou totalement hydrolysé en hydroxyle, R représente un radical alkyle, linéaire ou ramifié, étant en C₁-C₁₀, voire en C₁-C₈, de préférence un radical alkyle en C₁-C₄, plus préférentiellement méthyle et éthyle ;
- X représente un groupement espaceur, de préférence un radical hydrocarboné divalent aromatique en C₆-C₁₈ ou un radical hydrocarboné divalent aliphatique en C₁-C₁₈, de préférence un radical hydrocarboné divalent aliphatique linéaire en C₁-C₁₀, plus préférentiellement un groupement -(CH₂)ₙ-, n valant de 3, 4, 5, 6, 7 ou 8;
- les radicaux R' représentent, chacun indépendamment l'un de l'autre, un atome d'hydrogène, un radical alkyle, linéaire ou ramifié, en C₁-C₁₀, voire en C₁-C₈, de préférence un radical alkyle en C₁-C₄, plus préférentiellement méthyle et éthyle, ou un groupement trialkylsilyle avec des radicaux alkyles en C₁-C₄, plus préférentiellement méthyle et éthyle, plus préférentiellement les radicaux R' représentent, chacun indépendamment l'un de l'autre, un radical alkyle, linéaire ou ramifié, en C₁-C₁₀, voire en C₁-C₈, de préférence un radical alkyle en C₁-C₄, plus préférentiellement méthyle et éthyle
- y est un entier valant 1 ou 2, de préférence 1.

Dans un mode de réalisation, le deuxième élastomère diénique fonctionnalisé comprenant au sein de sa structure un groupe alcoxysilyle porteur d'une fonction amine, ne comprend pas d'autre fonction. En d'autres termes, les extrémités de chaînes élastomères, non liées à l'atome de silicium de ce groupe alcoxysilyle, ne portent aucune fonction.

Dans un autre mode de réalisation, le deuxième élastomère diénique comprenant au sein de sa structure un groupe alcoxysilyle porteur d'une fonction amine, est également porteur d'au moins une autre fonction. Cette autre fonction est généralement apportée par l'initiateur de polymérisation et se situe en extrémité de chaînes élastomères, non liées à l'atome de silicium du groupe alcoxysilyle . Selon un mode de réalisation préférentiel, cette autre fonction portée par le deuxième élastomère diénique est une fonction amine.

Une telle configuration peut être réalisée par exemple par l'emploi d'un amorceur portant une fonction amine, en particulier par l'utilisation d'un amorceur qui est un amidure de lithium, tel que l'amidure de lithium de la pyrrolidine ou de l'hexaméthylèneimine, ou un organolithien portant une fonction amine tel que le diméthylaminopropyllithium et le 3-pyrrolidinopropyllithium. De tels amorceurs ont été décrits par exemple dans les brevets EP-0 590 490 B1 et EP-0 626 278 B1. De tels élastomères ont par exemple été décrits dans WO2015018772 A1.

Il est entendu que le deuxième élastomère peut être constitué par un mélange d'élastomères qui se différencient les uns des autres de par la nature chimique des fonctions, par leur microstructure ou encore par leur macrostructure.

La proportion en ledit deuxième élastomère diénique fonctionnalisé varie avantageusement de 50% à 95% en poids, par rapport au poids total dudit premier élastomère diénique et dudit deuxième élastomère diénique fonctionnalisé.

En particulier, la fraction pondérale dudit premier élastomère diénique dans la matrice élastomérique est inférieure ou égale à 50% en poids, plus particulièrement elle varie de 5% à 50% en poids, avantageusement inférieure ou égale à 30% en poids, en particulier de 10% à 30% en poids.

En particulier, la fraction pondérale dudit deuxième élastomère diénique fonctionnalisé dans la matrice élastomérique est supérieure ou égale à 50% en poids, plus particulièrement elle varie de 50% à 95% en poids, avantageusement supérieure ou égale à 70% en poids, en particulier de 70% à 90% en poids.

Avantageusement, la matrice élastomère comprend plus de 50%, préférentiellement plus de 70%, en poids dudit deuxième élastomère diénique fonctionnalisé, le complément à 100% étant constitué par ledit premier élastomère diénique.

La matrice élastomère peut, selon certaines variantes de l'invention, comprendre outre le premier et le deuxième élastomère diénique, au moins un autre élastomère diénique tel que décrit plus haut. Cet autre élastomère diénique est de préférence choisi dans le groupe constitué par les polybutadiènes (BR), le caoutchouc naturel, les polyisoprènes (IR) de synthèse, les copolymères de butadiène, en particulier les copolymères de butadiène et d'un monomère vinyl aromatique, notamment les SBR, les copolymères d'isoprène et les mélanges de ces élastomères. De préférence, la fraction pondérale de cet autre élastomère diénique dans la matrice élastomère est inférieure ou égale 50%.

Selon un mode de réalisation de l'invention, le premier élastomère et le deuxième élastomère se présentent sous la forme d'un pré-mélange des deux élastomères. La matrice élastomère de la composition de caoutchouc selon l'invention comprend alors le premier élastomère diénique et le deuxième élastomère diénique fonctionnalisé sous forme d'un pré-mélange des deux élastomères.

Selon un autre mode de réalisation de l'invention, le premier élastomère et le deuxième élastomère ne se présentent pas sous la forme d'un pré-mélange des deux élastomères.

### Charge renforçante

La composition de caoutchouc de l'invention peut comprendre une ou plusieurs charges renforçantes.

On peut utiliser tout type de charge dite renforçante, connue pour ses capacités à renforcer une composition de caoutchouc utilisable notamment pour la fabrication de pneumatiques, par exemple une charge organique telle que du noir de carbone, une charge inorganique telle que de la silice ou encore un mélange de ces deux types de charges.

Comme noirs de carbone conviennent tous les noirs de carbone, notamment les noirs conventionnellement utilisés dans les pneumatiques ou leurs bandes de roulement. Parmi ces derniers, on citera plus particulièrement les noirs de carbone renforçants des séries 100, 200, 300, ou les noirs de série 500, 600 ou 700 (grades ASTM D-1765-2017), comme par exemple les noirs N115, N134, N234, N326, N330, N339, N347, N375, N550, N683, N772). Ces noirs de carbone peuvent être utilisés à l'état isolé, tels que disponibles commercialement, ou sous tout autre forme, par exemple comme support de certains des additifs de caoutchouterie utilisés. Les noirs de carbone pourraient être par exemple déjà incorporés à l'élastomère diénique, notamment isoprénique sous la forme d'un masterbatch (voir par exemple demandes WO97/36724-A2 ou WO99/16600-A1).

Comme exemple de charges organiques autres que des noirs de carbone, on peut citer les charges organiques de polyvinyle fonctionnalisé telles que décrites dans les demandes WO2006/069792-A1, WO2006/069793-A1, WO2008/003434-A1 et WO2008/003435-A1.

Par « charge inorganique renforçante », doit être entendu ici toute charge inorganique ou minérale, quelles que soient sa couleur et son origine (naturelle ou de synthèse), encore appelée charge « blanche », charge « claire » ou même charge « non-noire » par opposition au noir de carbone, capable de renforcer à elle seule une composition de caoutchouc destinée à la fabrication de pneumatiques. De manière connue, certaines charges inorganiques renforçantes peuvent se caractériser notamment par la présence de groupes hydroxyle (-OH) à leur surface.

Comme charges inorganiques renforçantes conviennent notamment des charges minérales du type siliceux, préférentiellement la silice (SiO₂) ou du type alumineux, en particulier l'alumine (Al₂O₃). La silice utilisée peut être toute silice renforçante connue de l'homme du métier, notamment toute silice précipitée ou pyrogénée présentant une surface spécifique BET ainsi qu'une surface spécifique CTAB toutes deux inférieures à 450 m²/g, de préférence comprises dans un domaine allant de 30 à 400 m²/g, notamment de 60 à 300 m²/g.

On peut utiliser tout type de silice précipitée, notamment des silices précipitées hautement dispersibles (dites « HDS » pour « highly dispersible » ou « highly dispersible silica »). Ces silices précipitées, hautement dispersibles ou non, sont bien connues de l'homme du métier. On peut citer, par exemple, les silices décrites dans les demandes WO03/016215-A1 et WO03/016387-A1. Parmi les silices HDS commerciales, on peut notamment utiliser les silices « Ultrasil ^{®} 5000GR », « Ultrasil ^{®} 7000GR » de la société Evonik, les silices « Zeosil ^{®} 1085GR», « Zeosil^{®} 1115 MP », « Zeosil^{®} 1165MP », « Zeosil^{®} Premium 200MP », « Zeosil^{®} HRS 1200 MP » de la Société Solvay. À titre de silice non HDS, les silices commerciales suivantes peuvent être utilisées : les silices « Ultrasil ^{®} VN2GR », « Ultrasil ^{®} VN3GR » de la société Evonik, la silice « Zeosil^{®} 175GR » » de la société Solvay, les silices « Hi-Sil EZ120G(-D) », « Hi-Sil EZ160G(-D) », « Hi-Sil EZ200G(-D) », « Hi-Sil 243LD », « Hi-Sil 210 », « Hi-Sil HDP 320G » de la société PPG.

À titre d'autres exemples de charges inorganiques susceptibles d'être utilisées dans les compositions de caoutchouc de l'invention peuvent être encore cités les charges minérales du type alumineux, en particulier de l'alumine (Al₂O₃), des oxydes d'aluminium, des hydroxydes d'aluminium, des aluminosilicates, des oxydes de titane, des carbures ou nitrures de silicium, tous du type renforçants tels que décrits par exemple dans les demandes WO99/28376-A2, WO00/73372-A1, WO02/053634-A1, WO2004/003067-A1, WO2004/056915-A2, US6610261-B1 et US6747087-B2.

On peut citer notamment les alumines « Baikalox A125 » ou « CR125 » (société Baïkowski), « APA-100RDX » (Condéa), « Aluminoxid C » (Evonik) ou « AKP-G015 » (Sumitomo Chemicals).

L'état physique sous lequel se présente la charge inorganique renforçante est indifférent, que ce soit sous forme de poudre, de microperles, de granulés, ou encore de billes ou toute autre forme densifiée appropriée. Bien entendu on entend également par charge inorganique renforçante des mélanges de différentes charges inorganiques renforçantes, en particulier de silices telles que décrites ci-dessus.

L'homme du métier comprendra qu'en remplacement de la charge inorganique renforçante décrite ci-dessus, pourrait être utilisée une charge renforçante d'une autre nature, dès lors que cette charge renforçante d'une autre nature serait recouverte d'une couche inorganique telle que de la silice, ou bien comporterait à sa surface des sites fonctionnels, notamment hydroxyles. À titre d'exemple, on peut citer des noirs de carbone partiellement ou intégralement recouverts de silice, ou des noirs de carbone modifiés par de la silice, tels que, à titre non limitatif, les charges de type « Ecoblack^{®} » de la série CRX2000 » ou de la série « CRX4000 » de la société Cabot Corporation.

L'homme du métier saura adapter la teneur en charge renforçante total selon l'utilisation concernée. La teneur en charge inorganique renforçante est de préférence inférieure ou égale à 200 pce, et particulièrement inférieure ou égale à 170 pce. La limite inférieure de la teneur en charge inorganique renforçante est dictée par le caractère renforçant de la charge De préférence, cette teneur est supérieure ou égale 10 pce.

L'invention concerne selon une de ses variantes, des compositions qui peuvent ainsi être qualifiées de compositions à haute teneur en charge inorganique renforçante, en particulier en silice. Selon cette variante de l'invention, la teneur en charge inorganique renforçante est alors préférentiellement supérieure ou égale à 50 pce. Plus particulièrement alors, la teneur en charge inorganique renforçante varie avantageusement de 50 pce à 170 pce.

En outre, la quantité en charge inorganique renforçante varie avantageusement de 20% à 40% en volume, par rapport au volume de la composition de caoutchouc, plus avantageusement de 20% à 35% en volume.

Avantageusement, la charge inorganique renforçante constitue la majorité ou la totalité de la charge renforçante.

Selon une variante de l'invention, lorsque du noir de carbone est également présent en plus de la charge inorganique renforçante, il peut être utilisé à un taux inférieur à 20 pce, plus avantageusement inférieur à 10pce, par exemple entre 0,5 et 20 pce, notamment de 1 à 10 pce.

Dans la présente description, la surface spécifique BET est déterminée par adsorption de gaz à l'aide de la méthode de Brunauer-Emmett-Teller décrite dans « The Journal of the American Chemical Society » (Vol. 60, page 309, février 1938), et plus précisément selon une méthode adaptée de la norme NF ISO 5794-1, annexe E de juin 2010 [méthode volumétrique multipoints (5 points) - gaz: azote
- dégazage sous vide: une heure à 160°C - domaine de pression relative p/po : 0,05 à 0,2].

Pour les charges inorganiques telles que la silice par exemple, Les valeurs de surface spécifique CTAB ont été déterminées selon la norme NF ISO 5794-1, annexe G de juin 2010. Le procédé est basé sur l'adsorption du CTAB (bromure de N-hexadécyl-N,N,N-triméthylammonium) sur la surface « externe » de la charge renforçante.

Pour les noirs de carbone, la surface spécifique STSA est déterminée selon la norme ASTM D6556-2016.

Le cas échéant, pour coupler la charge inorganique renforçante à l'élastomère diénique, on peut utiliser de manière bien connue un agent de couplage (ou agent de liaison) au moins bifonctionnel destiné à assurer une connexion suffisante, de nature chimique et/ou physique, entre la charge inorganique (surface de ses particules) et l'élastomère diénique. On utilise en particulier des organosilanes ou des polyorganosiloxanes au moins bifonctionnels. Par « bifonctionnel », on entend un composé possédant un premier groupe fonctionnel capable d'interagir avec la charge inorganique et un second groupe fonctionnel capable d'interagir avec l'élastomère diénique. Par exemple, un tel composé bifonctionnel peut comprend un premier groupe fonctionnel comprenant un atome de silicium, le dit premier groupe fonctionnel étant apte à interagir avec les groupes hydroxyles d'une charge inorganique et un second groupe fonctionnel comprenant un atome de soufre, le dit second groupe fonctionnel apte à interagir avec l'élastomère diénique.

Préférentiellement, les organosilanes sont choisis dans le groupe constitué par les organosilanes polysulfurés (symétriques ou asymétriques) tels que le tétrasulfure de bis(3-triéthoxysilylpropyle), en abrégé TESPT commercialisé sous la dénomination « Si69 » par la société Evonik ou le disulfure de bis-(triéthoxysilylpropyle), en abrégé TESPD commercialisé sous la dénomination « Si75 » par la société Evonik, les polyorganosiloxanes, les mercaptosilanes, les mercaptosilanes bloqués, tels que le « NXT-Silane » commercialisé par la société Momentive. Plus préférentiellement, l'organosilane est un organosilane polysulfuré.

Toutefois, de par la présence du deuxième élastomère diénique fonctionnalisé, l'utilisation d'un agent de couplage n'est qu'optionnelle.

Lorsqu'il est présent, la teneur en agent de couplage est avantageusement inférieure à 20 pce, étant entendu qu'il est en général souhaitable d'en utiliser le moins possible. Typiquement le taux d'agent de couplage représente de 0,5% à 15% en poids par rapport à la quantité de silice. Son taux est préférentiellement compris entre 0,5 et 15 pce, plus préférentiellement entre 3 et 12 pce. Ce taux est aisément ajusté par l'homme du métier selon le taux de silice utilisé dans la composition.

Les compositions de caoutchouc peuvent également contenir des agents de recouvrement de la charge inorganique renforçante lorsqu'une charge inorganique renforçante est utilisée, permettant d'améliorer leur faculté de mise en œuvre à l'état cru. Ces agents de recouvrement sont bien connus (voir par exemple les demandes de brevet WO2006/125533-A1, WO2007/017060-A1 et WO2007/003408-A1), on citera par exemple des silanes hydrolysables tels que des hydroxysilanes (voir par exemple WO2009/062733-A2), des alkylalkoxysilanes (notamment des alkyltriéthoxysilanes) , des polyols (par exemple diols ou triols), des polyéthers (par exemple des polyéthylène-glycols), des amines primaires, secondaires ou tertiaires, des polyorgano-siloxanes hydroxylés ou hydrolysables (par exemple des α,ω-dihydroxy-poly-organosilanes (voir par exemple EP0784072-A1).

### Additifs divers

Les compositions de caoutchouc conformes à l'invention peuvent comporter également tout ou partie des additifs et agents de mise en œuvre usuels, connus de l'homme de l'art et habituellement utilisés dans les compositions de caoutchouc pour pneumatiques, comme par exemple des plastifiants (tels que des huiles plastifiantes et/ou des résines plastifiantes), des charges (renforçantes ou non renforçantes / autres que celles précitées), des pigments, des agents de protection tels que cires anti-ozone, anti-ozonants chimiques, anti-oxydants, des agents anti-fatigue, des résines renforçantes (telles que décrites par exemple dans la demande WO 02/10269), un système de réticulation, par exemple à base de soufre et autres agents de vulcanisation, et/ou de peroxyde et/ou de bismaléimide.

### Préparation des compositions de caoutchouc

Les compositions de caoutchouc de l'invention sont fabriquées dans des mélangeurs appropriés, en utilisant deux phases de préparation successives selon une procédure générale bien connue de l'homme du métier : une première phase de travail ou malaxage thermo-mécanique (parfois qualifiée de phase "non-productive") à haute température, jusqu'à une température maximale comprise entre 130°C et 200°C, de préférence entre 145°C et 185°C, suivie d'une seconde phase de travail mécanique (parfois qualifiée de phase "productive") à plus basse température, typiquement inférieure à 120°C, par exemple entre 20°C et 100°C, phase de finition au cours de laquelle est incorporé le système de réticulation ou vulcanisation.

Selon un mode de réalisation de l'invention, tous les constituants de base des compositions de l'invention, à l'exception du système de vulcanisation, sont incorporés de manière intime, par malaxage, au cours de la première phase dite non-productive, c'est-à-dire que l'on introduit dans le mélangeur et que l'on malaxe thermomécaniquement, en plusieurs étapes, au moins ces différents constituants de base jusqu'à atteindre la température maximale comprise entre 130°C et 200°C, de préférence comprise entre 145°C et 185°C.

A titre d'exemple, la première phase (non-productive) est conduite en au moins trois étapes thermomécaniques au cours desquelles on introduit, dans un mélangeur approprié tel qu'un mélangeur interne usuel, tous les constituants nécessaires, les éventuels agents de recouvrement ou de mise en œuvre complémentaires et autres additifs divers, à l'exception du système de vulcanisation. La durée totale du malaxage, dans cette phase non-productive, est de préférence comprise entre 1 et 15 min.

Selon une mise en œuvre de l'invention le premier élastomère diénique et le deuxième élastomère diénique fonctionnalisé sont introduits dans le mélangeur interne indépendamment l'un de l'autre, simultanément ou successivement.

Selon une autre mise en œuvre de l'invention, le premier élastomère diénique et le deuxième élastomère diénique fonctionnalisé sont introduits dans le mélangeur interne sous forme d'un pré-mélange des deux élastomères. Ce pré-mélange peut être obtenu au préalable par mélangeage dans un mélangeur approprié des deux élastomères, éventuellement en présence d'un solvant organique. Le mélange des deux élastomères ainsi obtenu peut ensuite être utilisé tel quel. Ou, le cas échéant, le mélange ainsi obtenu peut ensuite être soumis à une étape de désolvatation et de récupération du mélange des deux élastomères, par exemple par stripping à la vapeur d'eau pour récupérer l'éventuel solvant organique et une dispersion aqueuse de granulats de mélange des deux élastomères, suivie d'une étape de récupération du mélange des deux élastomères à partir de cette dispersion aqueuse.

Indépendamment du mode d'introduction du premier élastomère diénique et du deuxième élastomère diénique fonctionnalisé, après refroidissement du mélange obtenu au cours de la première phase non-productive, on incorpore alors le système de vulcanisation à basse température, généralement dans un mélangeur externe tel qu'un mélangeur à cylindres; le tout est alors mélangé (phase productive) pendant quelques minutes, par exemple entre 2 et 15 min.

Le système de réticulation est préférentiellement un système de vulcanisation, c'est-à-dire un système à base de soufre (ou d'un agent donneur de soufre) et d'un accélérateur primaire de vulcanisation. A ce système de vulcanisation de base viennent s'ajouter, incorporés au cours de la première phase non-productive et/ou au cours de la phase productive telles que décrites ultérieurement, divers accélérateurs secondaires ou activateurs de vulcanisation connus tels qu'oxyde de zinc, acide stéarique ou composés équivalents, dérivés guanidiques.

Le soufre est utilisé à un taux préférentiel compris entre 0,5 et 12 pce, en particulier entre 1 et 10 pce. L'accélérateur primaire de vulcanisation est utilisé à un taux préférentiel compris entre 0,5 et 10 pce, plus préférentiellement compris entre 0,5 et 5,0 pce.

On peut utiliser comme accélérateur (primaire ou secondaire) tout composé susceptible d'agir comme accélérateur de vulcanisation des élastomères diéniques en présence de soufre, notamment des accélérateurs du type thiazoles ainsi que leurs dérivés, des accélérateurs de types thiurames, dithiocarbamates de zinc. Ces accélérateurs sont par exemple choisis dans le groupe constitué par disulfure de 2-mercaptobenzothiazyle (en abrégé "MBTS"), disulfure de tetrabenzylthiurame ("TBZTD"), N-cyclohexyl-2- benzothiazyle sulfénamide ("CBS"), N,N-dicyclohexyl-2-benzothiazyle sulfénamide ("DCBS"), N-ter-butyl-2-benzothiazyle sulfénamide ("TBBS"), N-ter-butyl-2- benzothiazyle sulfénimide ("TBSI"), dibenzyldithiocarbamate de zinc ("ZBEC") et les mélanges de ces composés.

La composition finale ainsi obtenue est ensuite calandrée par exemple sous la forme d'une feuille ou d'une plaque, notamment pour une caractérisation au laboratoire, ou encore extrudée sous la forme d'un profilé de caoutchouc utilisable par exemple comme une bande de roulement de pneumatique pour véhicule de tourisme, poids-lourds etc.

L'invention se rapporte aussi à un article fini ou semi-fini comportant une composition de caoutchouc selon l'invention.

L'invention se rapporte également à une bande de roulement de pneumatique comportant une composition de caoutchouc selon l'invention.

L'invention se rapporte aussi à un pneumatique ou produit semi-fini comportant une composition de caoutchouc selon l'invention.

### EXEMPLES DE REALISATIONS DE L'INVENTION

### Mesures et tests utilisés

### Caractérisation des polymères :

### a. Masse molaire des élastomères

Elle est déterminée par Chromatographie d'exclusion stérique triple détection (SEC3D)

### i) Principe de la mesure:

La chromatographie d'exclusion stérique ou SEC (Size Exclusion Chromatography) permet de séparer les macromolécules en solution suivant leur taille à travers des colonnes remplies d'un gel poreux. Les macromolécules sont séparées suivant leur volume hydrodynamique, les plus volumineuses étant éluées en premier.

Associée à 3 détecteurs (3D), un réfractomètre, un viscosimètre et un détecteur de diffusion de la lumière à 90°, la SEC permet d'appréhender la distribution de masses molaires absolues d'un polymère. Les différentes masses molaires absolues moyennes en nombre (Mn), en poids (Mw) et l'indice de polymolécularité (Ip = Mw/Mn) peuvent également être calculées.

### ii) Préparation du polymère:

Il n'y a pas de traitement particulier de l'échantillon de polymère avant analyse. Celui-ci est simplement solubilisé dans du (tétrahydrofuranne + 1%vol. de diisopropylamine + 1%vol. de triéthylamine) à une concentration d'environ 1 g/L. Puis la solution est filtrée sur filtre de porosité 0.45µm avant injection.

### iii) Analyse SEC3D:

L'appareillage utilisé est un chromatographe « WATERS Alliance ». Le solvant d'élution est du (tétrahydrofuranne + 1%vol. de diisopropylamine + 1%vol. de triéthylamine), le débit de 0,5 mL/min, la température du système de 35°C. On utilise un jeu de quatre colonnes POLYMER LABORATORIES en série, de dénominations commerciales : deux « MIXED A LS » et deux « MIXED B LS ».

Le volume injecté de la solution de l'échantillon de polymère est 100 µL. Le système de détection utilisé est le « TDA 302 de VISCOTEK », il est composé d'un réfractomètre différentiel, d'un viscosimètre différentiel et d'un détecteur de diffusion de la lumière à 90°. Pour ces 3 détecteurs, la longueur d'onde est de 670nm. Pour le calcul des masses molaires moyennes est intégrée la valeur de l'incrément d'indice de réfraction dn/dC de la solution de polymère, valeur préalablement définie dans du (tétrahydrofuranne + 1%vol. de diisopropylamine + 1%vol. de triéthylamine) à 35°C et 670nm. Le logiciel d'exploitation des données est le système « OMNISEC de VISCOTEK».

### b. Détermination de la proportion massique des populations (linéaire et couplée) en présence au sein des élastomères fonctionnels par SEC RI

Elle est déterminée par Chromatographie d'exclusion stérique (SEC) en équivalent polystyrène. La SEC permet de séparer les macromolécules en solution suivant leur taille à travers des colonnes remplies d'un gel poreux. Les macromolécules sont séparées suivant leur volume hydrodynamique, les plus volumineuses étant éluées en premier et les espèces étoilées étant éluées avant et les espèces linéaires couplées. Sans être une méthode absolue, la SEC permet d'appréhender la distribution des masses molaires d'un polymère. A partir de produits étalons commerciaux, les différentes masses molaires moyennes en nombre (Mn) et en poids (Mw) peuvent être déterminées et l'indice de polymolécularité ou polydispersité (Ip = Mw/Mn) calculé via un étalonnage dit de MOORE. Préparation du polymère: Il n'y a pas de traitement particulier de l'échantillon de polymère avant analyse. Celui-ci est simplement solubilisé dans du (tétrahydrofuranne + 1%vol. de diisopropylamine + 1%vol. de triéthylamine), à une concentration d'environ 1 g/l. Puis la solution est filtrée sur filtre de porosité 0,45µm avant injection.

Analyse SEC: L'appareillage utilisé est un chromatographe « WATERS Alliance ». Le solvant d'élution est du (tétrahydrofuranne + 1%vol. de diisopropylamine + 1%vol. de triéthylamine). Le débit est de 0,2 ml/min, la température du système de 35°C. On utilise un jeu de trois colonnes SHODEX en série précédées d'un filtre, de dénominations commerciales «KF805». Le volume injecté de la solution de l'échantillon de polymère est 50 µl. Le détecteur est un réfractomètre différentiel « WATERS 2410 » et le logiciel d'exploitation des données chromatographiques est le système «WATERS EMPOWER». Les masses molaires moyennes calculées sont relatives à une courbe d'étalonnage réalisée pour des SBR de microstructure suivante : 25% massique de motifs type styrène, 23% massique de motifs type 1-2 et 50% massique de motifs type 1-4 trans.

La proportion massique de chaines couplées et de chaines linéaires est estimée par la décomposition mathématique en somme de gaussiennes des chromatogrammes obtenus par SEC (en faisant l'hypothèse que les coefficients de réponse du détecteur réfractométrique (dn/dc) des différentes espèces présentes sont identiques).

### c. Microstructure des élastomères par RMN

Les déterminations des taux des différentes unités monomères et de leurs microstructures au sein du copolymère sont réalisées par une analyse RMN. Les spectres sont acquis sur un spectromètre 500 MHz BRUKER équipé d'une sonde " Broad Band " BBIz-grad 5 mm. L'expérience RMN ¹H quantitative, utilise une séquence simple impulsion 30° et un délai de répétition de 5 secondes entre chaque acquisition. Les échantillons sont solubilisés dans le CS₂+ et C₆D₁₂.

### Propriétés dynamiques des compositions de caoutchouc :

Les propriétés dynamiques G' et tan(δ) sont mesurées sur un viscoanalyseur (Metravib VA4000), selon la norme ASTM D 5992-96. On enregistre la réponse d'un échantillon de composition vulcanisée (éprouvette cylindrique de 4 mm d'épaisseur et de 400 mm² de section), soumis à une sollicitation sinusoïdale en cisaillement simple alterné, à la fréquence de 10Hz, dans les conditions normales de température (23°C) selon la norme ASTM D 1349-99.

On effectue un balayage en amplitude de déformation de 0,1% à 100% crête-crête (cycle aller), puis de 100% à 0,1% crête-crête (cycle retour). Les résultats exploités sont le module de conservation de cisaillement dynamique (G'), et le facteur de perte tan(δ).

La valeur de G' est représentative de la rigidité du matériau : plus la valeur de G' est forte, plus le matériau est rigide.

La valeur de tan(δ) est représentative de l'hystérèse du matériau et dans le cas présent de la résistance au roulement : plus la valeur de tan δ est faible, plus la résistance au roulement est basse.

### Les polymères :

### Polymère I1, selon l'invention :

SBR diénique fonctionnalisé synthétisé conformément au procédé décrit de la demande WO 2009133068 A1 en utilisant le 3-(N,N-dimethylaminopropyl)trimethoxysilane comme agent de couplage, de Mn = 36 000 g/mol et comprenant au sein de sa structure un groupe amino-alcoxysilyle selon l'invention.

**Tableau 1**

| | Mn (g/mol) | Mw (g/mol) | Ip | % de chaînes Linéaires | % de chaînes Couplées | % poids PB 1,2 | % poids Styrène |
|---|---|---|---|---|---|---|---|
| I1 | 36 000 | 38 000 | 1.08 | 94% | 86% | 16.8% | 20.2% |

### Polymère 12 selon l'invention :

SBR de Mn supérieure ou égale à 100 000 g/mol selon l'invention, non fonctionnalisé, Mn = 241 600 g/mol

**Tableau 2**

| | Mn (g/mol) | Mw (g/mol) | Ip | % poids PB 1,2 | % poids Styrène |
|---|---|---|---|---|---|
| I2 | 241600 | 456600 | 1,89 | 18,7 | 26,8 |

### Les compositions

On prépare les compositions C1, C2 et C3 conformes à l'invention et reportées dans le tableau ci- après.

Les formulations sont exprimées en pourcentage en poids pour 100 parties en poids d'élastomère (pce).

**Tableau 3**

| | C1 | C2 | C3 |
|---|---|---|---|
| I1 | 80 | 80 | 80 |
| I2 | 20 | 20 | 20 |
| Silice (1) | 88 | 117 | 152 |
| DPG (2) | 2,33 | 3,09 | 4,02 |
| Agent de recouvrement (3) | 9,7 | 12,9 | 16,75 |
| Anti-oxydant (4) | 2 | 2 | 2 |
| ZnO | 3 | 3 | 3 |
| Acide Stéarique | 2 | 2 | 2 |
| Soufre | 1 | 1 | 1 |
| Accélérateur (5) | 4 | 4 | 4 |

| | | | |
|---|---|---|---|
| (1) Silice de précipitation 160MP (ZEOSIL 1165MP), fabriquée par Solvay, type « HDS » de surface spécifique BET mesurée à 160m²/g, (2) DPG = diphénylguanidine ("perkacit" DPG de la société Flexsys) (3) octyltriéthoxysilane (silane "Dynasylan OCTEO" de la société Evonik) ; (4) N-(1,3-diméthylbutyl)-N'-phényl-p-phénylènediamine, (6-PPD de la société Flexsys) (5) N-cyclohexyl-2-benzothiazyl-sulfénamide ("Santocure CBS" de la société Flexsys) | | | |

Les compositions C1, C2 et C3 sont constituées respectivement de 25, 30 et 35 % volumique de silice.

Chacune des compositions est réalisée, dans un premier temps, par un travail thermo-mécanique, puis, dans un second temps de finition, par un travail mécanique.

On décrit en détail la marche de mélangeage pour la composition C1 et C2 :
On introduit dans un mélangeur interne de laboratoire de type « Banbury », dont la capacité est de 85 cm³, qui est rempli à 70 % et dont la température initiale est de 110 °C, la moitié de la matrice élastomérique, la moitié de la silice, la moitié du DPG.

La matrice élastomérique est constituée du coupage d'élastomères I1 et I2.

Le travail thermo-mécanique est réalisé au moyen de palettes de type « Banbury ».

Après une minute, on introduit un quart de la matrice élastomérique, un quart de la silice, et un quart du DPG.

A 2 minutes, on introduit le dernier quart de la matrice élastomérique, le dernier quart de la silice, et le dernier quart du DPG toujours sous travail thermo-mécanique. La vitesse des palettes est ajustée pour arriver à 160°C à environ 3 min.

A environ 3 minutes, l'agent de recouvrement est introduit et la vitesse des palettes est ajustée pour maintenir un plateau à 160°C pendant 1 minute.

Après 1 minute à 160°C, l'anti-oxydant, ZnO et acide stéarique sont introduits.

Le travail thermo-mécanique est encore conduit pendant une minute, en ajustant la vitesse des palettes pour maintenir une température maximale de tombée à 165°C environ.

Pour la composition C3, la silice est introduite en quatre ajouts.

On récupère le mélange ainsi obtenu, on le refroidit puis, dans un mélangeur externe (homo-finisseur), on ajoute le soufre à 30° C, en mélangeant encore le tout pendant une durée de 3 à 4 minutes (second temps de travail mécanique).

Les compositions ainsi obtenues sont ensuite calandrées, soit sous forme de plaques (d'une épaisseur allant de 2 à 3 mm) ou fines feuilles de caoutchouc, pour la mesure de leurs propriétés mécaniques.

La réticulation est effectuée à 150°C pendant 50 min.

### Propriétés des mélanges en déformation :

**Tableau 4**

| | C1 | C2 | C3 |
|---|---|---|---|
| G* 10% Retour | 2.14 | 3.41 | 4.71 |
| Tan(δ) - 10% Retour | 0.20 | 0.23 | 0.31 |

Les mélanges C1, C2 et C3 présentent à faible déformation une rigidité forte (G* 10% retour) mais conservent une dissipation d'énergie (tan δ 10% retour) satisfaisante pour une utilisation comme composition de caoutchouc entrant dans la fabrication de pneus.

Avec un taux élevé de charge inorganique renforçante, les mélanges C1, C2 et C3 présentent un compromis rigidité/ hystérèse adapté notamment à une utilisation en bande de roulement pour pneus.

## Revendications

1. Composition de caoutchouc à base d'au moins :
- Une matrice élastomère comprenant :
i. Un premier élastomère diénique ayant une masse moléculaire en nombre, Mn, supérieure ou égale à 100 000 g/mol ;
ii. Un deuxième élastomère diénique fonctionnalisé comprenant au sein de sa structure un groupe alcoxysilyle, éventuellement partiellement ou totalement hydrolysé en silanol, lié à l'élastomère par l'atome de silicium, le groupe alcoxysilyle étant porteur d'une fonction amine liée à l'atome de silicium directement ou par l'intermédiaire d'un groupe espaceur, ledit élastomère diénique fonctionnalisé a une masse moléculaire en nombre, Mn, inférieure ou égale à 80 000 g/mol ;
- Une charge inorganique renforçante.

2. Composition de caoutchouc selon la revendication précédente, **caractérisée en ce que** ledit deuxième élastomère diénique fonctionnalisé comprend majoritairement des chaînes linéaires.

3. Composition de caoutchouc selon l'une quelconque des revendications précédentes, **caractérisée en ce que** les chaînes linéaires du deuxième élastomère diénique sont majoritairement des chaînes couplées par le groupe alcoxysilyle.

4. Composition de caoutchouc selon l'une quelconque des revendications précédentes, **caractérisée en ce que** la fonction amine portée par le groupe alcoxysilyle est une fonction amine tertiaire, particulièrement la fonction diéthylamino ou diméthylamino.

5. Composition de caoutchouc selon l'une quelconque des revendications précédentes, **caractérisée en ce que** le groupe espaceur est un groupe hydrocarboné divalent aromatique en C₆-C₁₈ ou un groupe hydrocarboné divalent aliphatique en C₁-C₁₈, interrompu ou non par un ou plusieurs hétéroatomes.

6. Composition de caoutchouc selon l'une quelconque des revendications précédentes, dans laquelle la quantité en charge inorganique renforçante varie de 20% à 40% en volume, par rapport au volume de la composition de caoutchouc.

7. Composition de caoutchouc selon l'une quelconque des revendications précédentes, dans laquelle la fraction pondérale dudit premier élastomère diénique dans la matrice élastomérique est inférieure ou égale à 50% en poids.

8. Composition de caoutchouc selon l'une quelconque des revendications précédentes, dans laquelle la fraction pondérale dudit deuxième élastomère diénique fonctionnalisé dans la matrice élastomérique est supérieure ou égale à 50% en poids.

9. Composition de caoutchouc selon l'une quelconque des revendications précédentes, dans laquelle ledit deuxième élastomère diénique fonctionnalisé a une masse moléculaire en nombre, Mn, allant de 20 000 g/mol à 80 000 g/mol.

10. Composition de caoutchouc selon l'une quelconque des revendications précédentes, dans laquelle le groupe alcoxysilyle porteur d'une fonction amine répond à la formule :
(*-)_{3-y}Si (OR)_{y}(X-NR'₂)
dans laquelle,
- *- représente la liaison à une chaîne élastomère ;
- dans le radical alcoxyle de formule -OR, éventuellement partiellement ou totalement hydrolysés en hydroxyle, R représente un atome d'hydrogène ou un radical alkyle, linéaire ou ramifié, en C₁-C₁₀ ;
- X représente un groupement hydrocarboné divalent aromatique en C₆-C₁₈ ou groupement hydrocarboné divalent aliphatique en C₁-C₁₈ ;
- les radicaux R' représentent, chacun indépendamment l'un de l'autre, un atome d'hydrogène, un radical alkyle, linéaire ou ramifié, en C₁-C₁₀ ou un groupement trialkylsilyle avec des radicaux alkyles en C₁-C_{4 ;}
- y est un entier valant 1 ou 2.

11. Composition de caoutchouc selon la revendication 10, dans laquelle X représente un radical hydrocarboné divalent aliphatique linéaire en C₁-C₁₀, plus préférentiellement un groupement -(CH₂)ₙ-, n valant 3, 4, 5, 6, 7 ou 8.

12. Composition de caoutchouc selon la revendication 10 ou 11, dans laquelle les radicaux R' représentent, chacun indépendamment l'un de l'autre, un radical alkyle en C₁-C₄, plus préférentiellement méthyle et éthyle.

13. Article fini ou semi-fini comportant une composition de caoutchouc selon l'une quelconque des revendications précédentes.

14. Bande de roulement de pneumatique comportant une composition de caoutchouc selon l'une quelconque des revendications 1 à 12.

15. Pneumatique ou produit semi-fini comportant une composition de caoutchouc selon l'une quelconque des revendications 1 à 12.

## Patentansprüche

1. Kautschukzusammensetzung auf Basis von mindestens:
- einer Polymermatrix, umfassend:
i. ein erstes Dienelastomer mit einer zahlenmittlere Molmasse Mn größer oder gleich 100.000 g/mol;
ii. ein funktionalisiertes zweites Dienelastomer, das in seiner Struktur eine Alkoxysilylgruppe, die gegebenenfalls teilweise oder vollständig zu Silanol hydrolysiert ist und über das Siliciumatom an das Elastomer gebunden ist, umfasst, wobei die Alkoxysilylgruppe eine Aminfunktion trägt, die direkt oder über eine Spacergruppe an das Siliciumatom gebunden ist, wobei das funktionalisierte Dienelastomer eine zahlenmittlere Molmasse Mn kleiner oder gleich 80.000 g/mol aufweist;
- einem verstärkenden anorganischen Füllstoff.

2. Kautschukzusammensetzung nach dem vorhergehenden Anspruch, **dadurch gekennzeichnet, dass** das funktionalisierte zweite Dienelastomer hauptsächlich lineare Ketten umfasst.

3. Kautschukzusammensetzung nach einem der vorhergehenden Ansprüche, **dadurch gekennzeichnet, dass** es sich bei den linearen Ketten des zweiten Dienelastomers hauptsächlich um Ketten handelt, die über die Alkoxysilylgruppe gebunden sind.

4. Kautschukzusammensetzung nach einem der vorhergehenden Ansprüche, **dadurch gekennzeichnet, dass** es sich bei der Aminfunktion, die die Alkoxysilylgruppe trägt, um eine tertiäre Aminfunktion, insbesondere die Diethylamino- oder Dimethylaminofunktion, handelt.

5. Kautschukzusammensetzung nach einem der vorhergehenden Ansprüche, **dadurch gekennzeichnet, dass** es sich bei der Spacergruppe um eine zweiwertige aromatische C₆-C₁₈-Kohlenwasserstoffgruppe oder eine zweiwertige aliphatische C₁-C₁₈-Kohlenwasserstoffgruppe, die gegebenenfalls durch ein oder mehrere Heteroatome unterbrochen ist, handelt.

6. Kautschukzusammensetzung nach einem der vorhergehenden Ansprüche, **dadurch gekennzeichnet, dass** die Menge an verstärkendem anorganischem Füllstoff von 20 bis 40 Vol.-%, bezogen auf das Volumen der Kautschukzusammensetzung, variiert.

7. Kautschukzusammensetzung nach einem der vorhergehenden Ansprüche, **dadurch gekennzeichnet, dass** der Gewichtsanteil des ersten Dienelastomers in der Elastomermatrix kleiner oder gleich 50 Gew.-% ist.

8. Kautschukzusammensetzung nach einem der vorhergehenden Ansprüche, **dadurch gekennzeichnet, dass** der Gewichtsanteil des funktionalisierten zweiten Dienelastomers in der Elastomermatrix größer oder gleich 50 Gew.-% ist.

9. Kautschukzusammensetzung nach einem der vorhergehenden Ansprüche, **dadurch gekennzeichnet, dass** das funktionalisierte zweite Dienelastomer eine zahlenmittlere Molmasse Mn im Bereich von 20.000 g/mol bis 80.000 g/mol aufweist.

10. Kautschukzusammensetzung nach einem der vorhergehenden Ansprüche, **dadurch gekennzeichnet, dass** die Alkoxysilylgruppe, die eine Aminfunktion trägt, der folgenden Formeln entspricht:
(*-)_{3-y}Si(OR)_{y}(X-NR'₂) in der
- *- für die Bindung an eine Elastomerkette steht;
- in dem Alkoxyrest der Formel -OR, der gegebenenfalls teilweise oder vollständig zu Hydroxyl hydrolysiert ist, R für ein Wasserstoffatom oder einen linearen oder verzweigten C₁-C₁₀-Alkylrest steht;
- X für eine zweiwertige aromatische C₆-C₁₈-Kohlenwasserstoffgruppe oder eine zweiwertige aliphatische C₁-C₁₈-Kohlenwasserstoffgruppe steht;
- die Reste R' jeweils unabhängig voneinander für ein Wasserstoffatom, einen linearen oder verzweigten C₁-C₁₀-Alkylrest oder eine Trialkylsilylgruppe mit C₁-C₄-Alkylresten stehen;
- y eine ganze Zahl mit einem Wert von 1 oder 2 ist.

11. Kautschukzusammensetzung nach Anspruch 10, wobei X für einen linearen zweiwertigen aliphatischen C₁-C₁₀-Kohlenwasserstoffrest, weiter bevorzugt eine -(CH₂)ₙ-Gruppe, wobei n einen Wert von 3, 4, 5, 6, 7 oder 8 hat, steht.

12. Kautschukzusammensetzung nach Anspruch 10 oder 11, wobei die Reste R' jeweils unabhängig voneinander für einen C₁-C₄-Alkylrest, weiter bevorzugt Methyl und Ethyl, stehen.

13. Kautschukerzeugnis oder -halbzeug, umfassend eine Kautschukzusammensetzung nach einem der vorhergehenden Ansprüche.

14. Reifenlauffläche, umfassend eine Kautschukzusammensetzung nach einem der Ansprüche 1 bis 12.

15. Reifen oder Halbzeug, umfassend eine Kautschukzusammensetzung nach einem der Ansprüche 1 bis 12.

## Claims

1. Rubber composition based on at least:
- an elastomer matrix comprising:
i. a first diene elastomer having a number-average molecular mass, Mn, of greater than or equal to 100 000 g/mol;
ii. a functionalized second diene elastomer comprising within its structure an alkoxysilyl group, optionally partially or completely hydrolysed to silanol, attached to the elastomer by the silicon atom, the alkoxysilyl group bearing an amine function attached to the silicon atom directly or via a spacer group, said functionalized diene elastomer having a number-average molecular mass, Mn, of less than or equal to 80 000 g/mol;
- a reinforcing inorganic filler.

2. Rubber composition according to the preceding claim, **characterized in that** said functionalized second diene elastomer comprises predominantly linear chains.

3. Rubber composition according to either one of the preceding claims, **characterized in that** the linear chains of the second diene elastomer are predominantly chains connected via the alkoxysilyl group.

4. Rubber composition according to any one of the preceding claims, **characterized in that** the amine function borne by the alkoxysilyl group is a tertiary amine function, in particular the diethylamino or dimethylamino function.

5. Rubber composition according to any one of the preceding claims, **characterized in that** the spacer group is a divalent aromatic C₆-C₁₈ hydrocarbon group or a divalent aliphatic C₁-C₁₈ hydrocarbon group, which is or is not interrupted by one or more heteroatoms.

6. Rubber composition according to any one of the preceding claims, in which the amount of reinforcing inorganic filler varies from 20% to 40% by volume with respect to the volume of the rubber composition.

7. Rubber composition according to any one of the preceding claims, in which the fraction by weight of said first diene elastomer in the elastomeric matrix is less than or equal to 50% by weight.

8. Rubber composition according to any one of the preceding claims, in which the fraction by weight of said functionalized second diene elastomer in the elastomeric matrix is greater than or equal to 50% by weight.

9. Rubber composition according to any one of the preceding claims, in which said functionalized second diene elastomer has a number-average molecular mass, Mn, ranging from 20 000 g/mol to 80 000 g/mol.

10. Rubber composition according to any one of the preceding claims, in which the alkoxysilyl group bearing an amine function corresponds to the formula:
(*-)_{3-y}Si(OR)_{y}(X-NR'₂)
in which
- *- represents the bond to an elastomer chain;
- in the alkoxyl radical of formula -OR, which is optionally partially or completely hydrolysed to hydroxyl, R represents a hydrogen atom or a linear or branched C₁-C₁₀ alkyl radical;
- X represents a divalent aromatic C₆-C₁₈ hydrocarbon group or a divalent aliphatic C₁-C₁₈ hydrocarbon group;
- the radicals R' represent, each independently of one another, a hydrogen atom, a linear or branched C₁-C₁₀ alkyl radical or a trialkylsilyl group with C₁-C₄ alkyl radicals;
- y is an integer having the value 1 or 2.

11. Rubber composition according to Claim 10, in which X represents a linear divalent aliphatic C₁-C₁₀ hydrocarbon radical, more preferably a -(CH₂)ₙ-group, n having the value 3, 4, 5, 6, 7 or 8.

12. Rubber composition according to Claim 10 or 11, in which the radicals R' represent, each independently of one another, a C₁-C₄ alkyl radical, more preferably a methyl or ethyl radical.

13. Finished or semi-finished article comprising a rubber composition according to any one of the preceding claims.

14. Tyre tread comprising a rubber composition according to any one of Claims 1 to 12.

15. Tyre or semi-finished product comprising a rubber composition according to any one of Claims 1 to 12.
